(19) Europäisches Patentamt
European Patent Office
Office européen des brevets

(11) **EP 2 098 981 B1**

(12) **FASCICULE DE BREVET EUROPEEN**

(45) Date de publication et mention
de la délivrance du brevet:
**12.08.2015 Bulletin 2015/33**

(51) Int Cl.:
***G06K 19/07*** *(2006.01)*     ***G06K 19/077*** *(2006.01)*

(21) Numéro de dépôt: **09356015.9**

(22) Date de dépôt: **19.02.2009**

(54) **Dispositif de communication sans contact**

Kontaktlose Kommunikationsvorrichtung

Wireless communication device

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **05.03.2008 FR 0851444**

(43) Date de publication de la demande:
**09.09.2009 Bulletin 2009/37**

(73) Titulaire: **Commissariat à l'Énergie Atomique
et aux Énergies Alternatives
75015 Paris (FR)**

(72) Inventeur: **Savry, Olivier**
**38360 Sassenage (FR)**

(74) Mandataire: **Vuillermoz, Bruno**
**Cabinet Laurent & Charras**
**"Le Contemporain"**
**50, Chemin de la Bruyère**
**69574 Dardilly Cédex (FR)**

(56) Documents cités:
**WO-A-02/01497     FR-A- 2 812 482
FR-A- 2 887 712**

EP 2 098 981 B1

**Description**

**DOMAINE DE L'INVENTION**

La présente invention a trait au domaine des circuits intégrés sans contact, comme des cartes à puce sans contact du type décrites dans la norme ISO 14443, capables de recevoir et de transmettre des données par couplage inductif par l'intermédiaire d'antenne.

**ETAT ANTERIEUR DE LA TECHNIQUE**

Un besoin grandissant d'intégration sur un même support de plusieurs puces sans contact se fait sentir notamment en raison d'une demande accrue en mémoire et en sécurité.

L'intégration de plusieurs puces sur un même support pose cependant un problème d'encombrement lié aux distances de communication. En effet, les cartes sans contact émettent leurs données à l'aide d'un champ magnétique dont la puissance dépend de la taille de l'antenne inductive qu'elles embarquent. En conséquence la simple juxtaposition dans une même carte de plusieurs puces sans contact suppose que chacune de celle-ci dispose d'une antenne encombrante afin de présenter une portée de communication adéquate.

Pour pallier un tel problème, il est proposé dans le document FR 2 812 482 une carte sans contact multi puces comportant une antenne collective formant une boucle inductive de grande surface pour établir une importante portée de communication. Chacune des puces sans contact de la carte comporte alors une antenne formant une boucle inductive de petite surface placée à l'intérieur de l'antenne collective. L'antenne collective sert ainsi de relais de communication et d'alimentation pour les puces sans contact.

Toutefois, dans ce type d'architecture, l'antenne collective sert de relais à la fois pour la communication des puces avec l'environnement de la carte (usuellement un lecteur sans contact) et pour la communication entre les puces elle-même. Il s'en suit que des mécanismes complexes doivent être prévus pour gérer le flux de données transitant dans l'antenne collective.

En outre, dans de nombreuses applications certaines puces n'ont pas vocation à communiquer avec un lecteur externe à la carte mais uniquement avec d'autres puces de la carte. On peut ainsi citer les groupements de puces formant ensemble une mémoire pour le stockage de données ou encore les puces en charge de la sécurité de la communication comme les crypto-processeurs par exemple.

Non seulement la communication via uniquement une antenne collective induit un problème de bande-passante et de collision de données lorsque l'ensemble des communications doit transiter par celle-ci, mais en outre les communications des puces n'ayant pas vocation à communiquer avec un lecteur externe sont accessibles pour celui-ci, ce qui peut être dommageable notamment pour des raisons de sécurité.

**EXPOSE DE L'INVENTION**

Le but de la présente invention est de résoudre le problème susmentionné en proposant une architecture de communication dans une carte multi puces sans contact dans laquelle les puces peuvent communiquer entre elles de manière indépendante sans utiliser l'antenne de la carte prévue pour communiquer avec l'extérieur ni aucun autre élément externe à la carte comme un lecteur sans contact par exemple.

A cet effet, l'invention a pour objet un dispositif comportant une première antenne inductive, et une pluralité de puces comportant chacune un circuit intégré et une seconde antenne inductive pour l'alimentation et la communication dudit circuit intégré.

Selon l'invention, une puce parmi la pluralité de puces est apte à être reliée à la première antenne inductive, et le dispositif comprend en outre une troisième antenne inductive en couplage inductif avec chacune des secondes antennes de la pluralité de puces.

En d'autres termes, une puce, dite « maître », assure la communication de la carte avec l'extérieur et sert de tête de pont à un réseau de communication sans contact entre les puces dont la troisième antenne sert de bus. Ce réseau de communication interne à la carte permet ainsi une communication directe entre puces sans l'aide d'éléments extérieurs à la carte, et si nécessaire selon des protocoles et/ou des canaux de fréquence différents que ceux utilisés pour communiquer avec le lecteur sans contact.

La troisième antenne sera ci-après qualifiée d'« antenne bus », la seconde antenne d'une puce d'« antenne puce » et la première antenne d'« antenne carte ». Les autres puces que la puce maître seront quant à elle qualifiées de puces « esclaves ».

On notera que la liaison entre la puce maître et l'antenne carte peut être réalisée de différentes façons. La liaison peut être de nature électromagnétique par un couplage inductif entre l'antenne de la puce maître et l'antenne carte, ou, de nature électrique, par exemple au moyen de fils ou de pistes électriques. On préfèrera une liaison électrique pour permettre une transmission de puissance plus importante et limiter les interférences entre les champs magnétiques.

On notera par ailleurs que la notion de couplage inductif entre les antennes puce et l'antenne bus signifie ici qu'il existe une liaison électromagnétique entre la puce maître et les puces esclaves permettant à ces dernières de récupérer suffisamment d'énergie pour créer une tension d'alimentation nominale nécessaire au fonctionnement de leur circuits internes.

Or, l'énergie reçue par une puce esclave dépend de la puissance du signal émis par la puce maître et du coefficient de couplage inductif, via l'antenne bus, entre l'antenne de la puce maître et l'antenne de la puce esclave. De fait, plusieurs paramètres concourent à la bonne alimentation des puces esclaves.

Par exemple, il peut être choisi une puce maître émettant un signal de forte puissance et un coefficient de couplage faible, ce qui permet par exemple de disposer les antennes puce dans un plan différent de celui de l'antenne bus pour des raisons de simplicité de fabrication du dispositif.

Au contraire, il peut être choisi une puce maître émettant un signal de plus faible puissance combiné avec un fort coefficient de couplage inductif en accolant les surfaces des antennes puce à celle des antennes bus, par exemple pour limiter l'encombrement du dispositif. De manière générale, n'importe quelle combinaison satisfaisante de puissance d'émission de la puce maître et de coefficient de couplage peut ainsi être envisagée.

Enfin, on notera que la limitation des interférences avec un lecteur externe n'est pas restreinte au seul confinement électromagnétique des champs dans le dispositif en raison d'une distance très faible entre les antennes puce et l'antenne bus. En effet, dès lors que les antennes puce sont alimentées de manière satisfaisante, plusieurs solutions sont possibles, comme le confinement électromagnétique et/ou une communication entre les puces basée sur un canal de fréquence différent de celui utilisé par le lecteur externe.

Selon un mode de réalisation particulier de l'invention, chacune des secondes antennes de la pluralité de puces forme au moins une boucle inductive, la troisième antenne forme au moins une boucle inductive, et la surface définie par la seconde antenne est accolée à la surface définie par la troisième antenne.

En d'autres termes, un fort couplage inductif est réalisé entre les antennes puce et l'antenne bus permet d'utiliser des antennes puce de faibles dimensions et de réduire ainsi l'encombrement et la portée d'émission des puces.

Avantageusement, la troisième antenne est vrillée de manière à définir des surfaces élémentaires respectivement accolées aux secondes antennes de la pluralité de puces.

En d'autres termes, il est obtenu un couplage très faible entre chacune des puces et un lecteur externe, ainsi qu'une minimisation des interférences dans les communications inter-puces.

Avantageusement, le dispositif est une carte à puces, et la troisième antenne est vrillée dans le plan de la carte.

En d'autres termes, le fait de vriller l'antenne bus dans le plan de la carte implique qu'il n'y a pas d'empilement de puces. L'épaisseur de la carte reste donc inchangée.

Selon un mode de réalisation de l'invention, la troisième antenne est coudée et vrillée de manière à définir des surfaces élémentaires enroulées respectivement autour des secondes antennes de la pluralité de puces. Avantageusement, le dispositif est une carte à puces, et la troisième antenne est coudée dans un plan sensiblement perpendiculaire au plan de la carte.

En d'autres termes, le fait de couder l'antenne bus dans un plan perpendiculaire à la carte permet un empilement des puces. La longueur et la largeur de la carte restent ainsi inchangées.

Selon un mode de réalisation particulier de l'invention, la surface définie par la troisième antenne est sensiblement égale à la somme des surfaces définies par les secondes antennes de la pluralité de puces.

En d'autres termes, en utilisant un couplage fort entre les antennes puce et l'antenne bus et en choisissant des surfaces sensiblement égales, les champs magnétiques utilisés pour la communication inter-puces présentent un confinement maximal. Le réseau de communication interne à la puce est ainsi isolé de manière efficace de l'environnement de la carte et notamment d'un lecteur sans contact externe.

Selon un mode de réalisation particulier de l'invention, le dispositif est apte à communiquer avec son environnement via la première antenne selon un premier canal de communication, et les puces sont aptes à communiquer entre elles via la troisième antenne selon un second canal de communication différent du premier canal de communication.

En d'autres termes, le réseau interne utilise son propre canal de communication.

Avantageusement, la puce apte à être reliée à la première antenne comporte un module de redressement du signal reçu sur la première antenne et un module de sélection d'une plage de fréquence du signal redressée, le signal redressé et filtré formant une porteuse pour le second canal de communication.

En d'autres termes, la communication des cartes sans contact est régie par des normes prédéfinies, comme la norme ISO 14443 par exemple, qui impose une communication entre un lecteur sans contact et une carte sans contact selon une modulation d'amplitude d'une porteuse (typiquement une porteuse à 13,56 Mhz dans le cadre de la norme ISO 14443). Le redresseur de la puce maître produit ainsi un signal présentant une fréquence double de celle du signal reçu et le module de sélection sélectionne une harmonique, par exemple la seconde, du signal redressé. Une porteuse de fréquence double de celle utilisée dans la communication entre la carte et le lecteur est ainsi obtenue pour la communication entre les puces.

En outre, le force électromotrice induite dans les antennes bus et puce est proportionnelle à la fréquence de la porteuse. Utiliser une fréquence double permet ainsi de doubler l'énergie transmise par ces antennes, ce qui compense au moins en partie leur faible surface. De manière analogue, d'autres harmoniques peuvent être utilisées par la communication entre puces.

## BREVE DESCRIPTION DES FIGURES

L'invention sera mieux comprise à la lecture de la description qui va suivre, données uniquement à titre d'exemple, et faite en relation avec les dessins annexés dans lesquels des références identiques désignent des éléments identiques ou analogues, et dans lesquels :

- la figure 1 est une vue schématique de dessus d'une carte sans contact selon un premier mode de réalisation de l'invention ;
- la figure 2 est une vue schématique de dessus de la carte de la figure 1 mais sans les puces ;
- les figures 3 et 4 sont des vues schématiques de dessous d'une puce esclave et d'une puce maître respectivement ;
- les figures 5 et 6 sont des vues schématiques d'un réseau de communication multi-puces selon l'état de la technique et selon l'invention ;
- la figure 7 est une vue schématique d'une carte sans contact pourvue d'une variante de l'antenne bus ;
- la figure 8 est une vue schématique de dessus d'une autre variante de l'antenne bus ;
- la figure 9 est une vue schématique de côté d'une carte sans contact selon un second mode de réalisation de l'invention ; et
- la figure 10 est une vue schématique plus en détail d'une puce maître et d'une puce esclave.

## DESCRIPTION DETAILLEE DE L'INVENTION

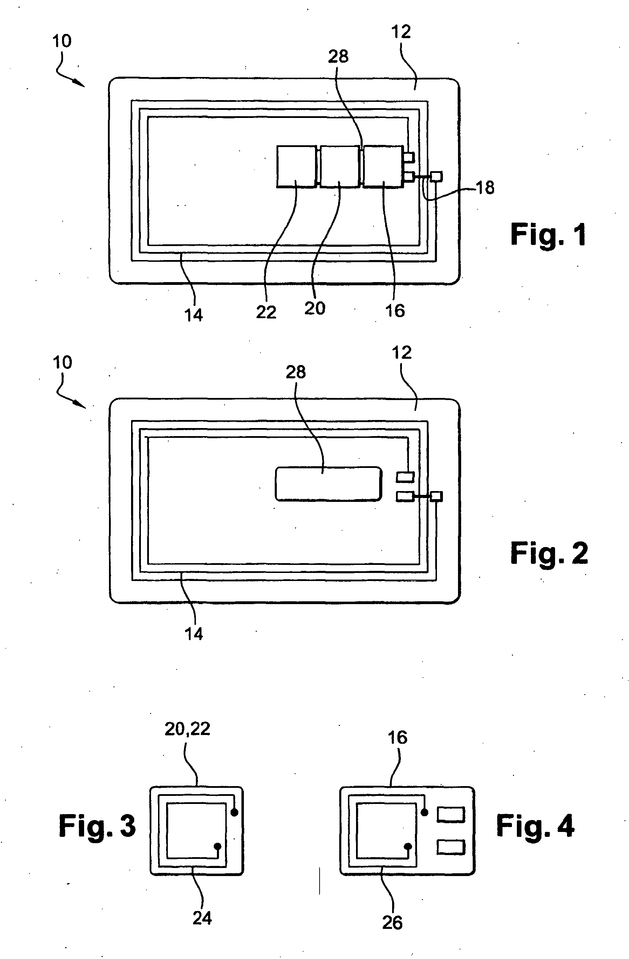

Sur les figures 1 à 3, une carte multi-puces sans contact, par exemple mettant en oeuvre la norme ISO 14443, est illustrée sous la référence générale **10**. La carte sans contact **10** comporte un support rectangulaire **12,** par exemple en matière plastique, sur lequel, ou dans lequel, est agencé une antenne **14** de grandes dimensions formant plusieurs boucles inductives sur le pourtour de la carte **10**. L'antenne **14** est ci-après dénommée antenne « carte ».

La carte **10** comporte également une puce **16,** dite puce « maître », qui est connectée électriquement à l'antenne carte **14,** par exemple au moyen de connexions **18** réalisées à l'aide d'une technique de « *flip-chip* ». La puce maître **16** met en oeuvre la communication de la carte **10** avec son environnement au moyen de l'antenne carte **14,** comme par exemple une communication sans contact avec un lecteur (non représenté).

Plusieurs puces sans contact **20, 22** sont également prévues sur la carte **10,** ces puces, dite « esclaves », n'étant pas connectées électriquement à l'antenne carte **14.**

Chacune des puces **16, 20, 26** comprend une plaquette de silicium sur une face dite « active » de laquelle est formé un circuit intégré mettant en oeuvre les fonctions de communication sans contact ainsi que des fonctions pour laquelle la puce est prévue, comme du stockage de données par exemple.

Chaque puce **16, 20, 26** comporte sur sa face active une antenne individuelle **24, 26,** ou antenne « puce », formant des boucles inductives, comme cela est illustrée aux figures 3 et 4 qui montrent ladite face active.

La carte **10** comporte enfin une troisième antenne **28,** dite antenne « bus », formant une boucle inductive sur ou dans le support **12** de la carte **10**. Cette boucle inductive définit une surface sur laquelle sont accolées les surfaces actives des puces **16, 18, 20** comportant les antennes puce **24, 26.**

La taille peu importante des antennes puce **24, 26** a pour effet que ces dernières présentent une inductance peu importante. La portée de communication des antennes puce **24, 26** est donc très faible, typiquement de l'ordre du centimètre pour une puce de 25 mm$^2$. Toutefois, les antennes puce **24, 26** étant disposées sur l'antenne bus **28,** un couplage inductif fort entre chacune des antennes puce **24, 26** et l'antenne bus **28** est ainsi crée. Les puces **16, 20, 22** peuvent ainsi communiquer entre elles via l'antenne bus **28,** créant de ce fait un réseau de communication n'utilisant que des éléments de la carte **10** et indépendant de l'environnement de celle-ci.

De préférence, la surface de l'antenne bus **28** est sensiblement égale à la somme des surfaces des antennes puces **24, 26.** Ainsi, les champs magnétiques utilisés pour la communication entre puces sont confinés au maximum.

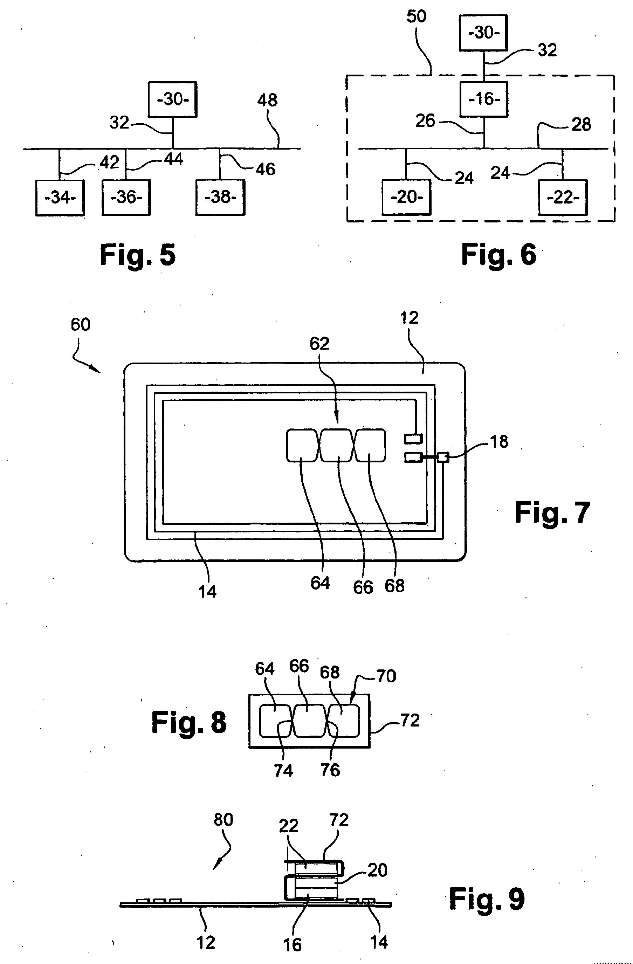

La figure 5 illustre schématique un réseau de communication de l'état de la technique, tel que par exemple celui du document FR 2 812 482, entre les circuits intégrés de puces d'une carte sans contact et le circuit d'un lecteur sans contact. Ce réseau comprend le circuit **30** d'un lecteur sans contact, connecté à une antenne inductive **32,** des circuits intégrés **34, 36, 38** de puces sans contact connectés respectivement à des antennes inductives individuelles **40, 42, 44,** l'antenne **32** du lecteur sans contact et les antennes **42, 44, 46** des puces étant couplées à une antenne inductive collective **48** de la carte.

La figure 6 illustre schématiquement un réseau de communication sans contact selon l'invention. Comme on peut le constater, contrairement à l'état de la technique, un réseau de communication **50,** interne à la carte **10** et indépendant du lecteur sans contact **30** est créé.

Sur la figure 7, il est illustré une seconde variante **62** de l'antenne bus. Selon cette variante, l'antenne bus **62** est formée d'une boucle inductive vrillée dans le plan de la carte sans contact **60** pour former autant de surfaces élémentaires **64, 66, 68** que de puces sans contact, les surfaces actives de celles-ci étant agencées sur ces surfaces élémentaires respectivement. Il est ainsi obtenu un couplage encore plus faible de chacune des antennes puce avec une antenne d'un lecteur sans contact. En outre, les interférences sont minimisées.

Dans ce qui vient d'être décrit, l'antenne bus est formée dans le plan de la carte sans contact, définissant ainsi une surface suffisance pour accoler la puce maître et les puces esclaves. Aucun empilement de puces n'est ainsi réalisé de sorte que l'épaisseur de carte sans contact reste inchangée.

Toutefois, il peut être souhaité de limiter la longueur et/ou la largeur de la carte sans contact.

Sur la figure 8, une antenne bus **70** est formée sur un support **72** flexible distinct de celui de la carte sans contact. L'antenne bus est vrillée pour définir des surfaces élémentaires analogues à celles de la figure 7 et le support **72,** et donc l'antenne **70,** est coudé aux points de vrillage **74, 76** pour définir un étagement perpendiculaire au plan de la carte sans contact **80,** comme cela est visible à la figure 9. Les puces maître et esclaves **16, 20, 22** sont empilées dans les comportements ainsi définis avec leurs surfaces actives respectivement accolées sur les surfaces élémentaires **64, 66, 68.** Une réduction de la surface de la carte sans contact est ainsi obtenue.

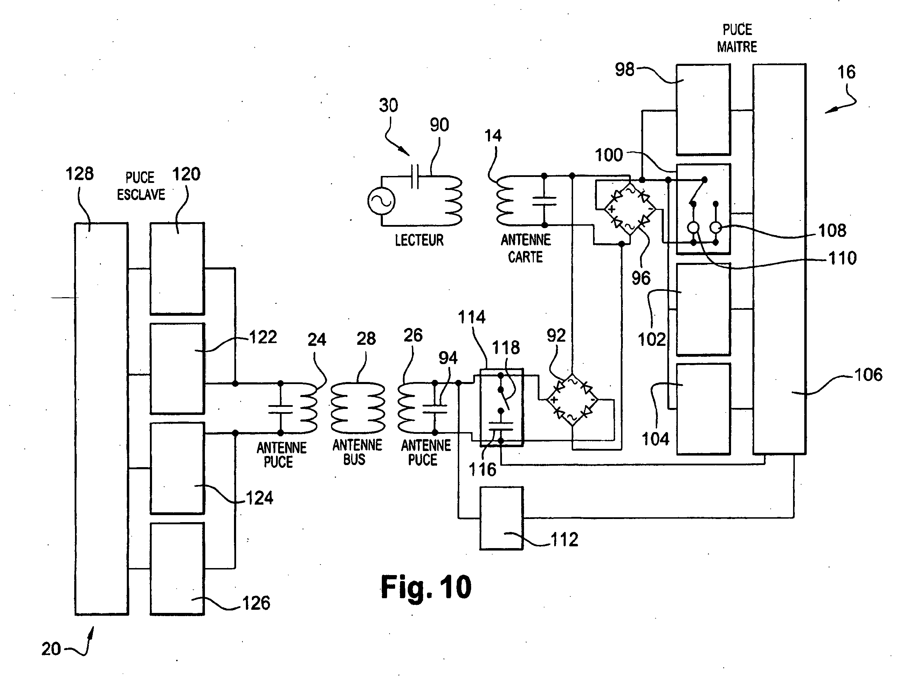

La figure 10 illustre de manière schématique la puce maître **16,** une puce esclave, par exemple la puce **20,** un lecteur sans contact **30,** l'antenne carte **14** et l'antenne bus **28.**

Le lecteur **30,** comportant une antenne inductive **90,** communique avec la puce maître **16** et lui fournit de l'énergie via une porteuse à 13,56 MHz dans le cadre de la norme ISO 14443.

La puce maître **16** comporte un pont redresseur à diodes **92** dont les bornes d'entrée sont connectées aux bornes de l'antenne carte **14** et dont les bornes de sortie sont connectées aux bornes de l'antenne puce **26.** Le pont **92** redresse donc le signal aux bornes de l'antenne puce **14** pour créer un signal de fréquence double aux bornes de l'antenne puce **26.**

La puce maître **16** comprend également un condensateur de résonance **94,** connecté aux bornes de l'antenne puce **26** et sélectionnant, en association avec la bobine de l'antenne puce, une bande de fréquences centrée sur le double de la fréquence de la porteuse utilisée pour la communication entre la puce maître **16** et le lecteur **30,** à savoir la fréquence 27,12 Mhz dans le cadre de la norme ISO 14443.

Par exemple, si le signal « f(t) » créé aux bornes de l'antenne carte **14** par le champ magnétique émis par l'antenne **90** du lecteur **30** est purement sinusoïdal, à savoir est de la forme :

$$f(t) = A\sin(\omega t)$$

où A est une amplitude, t les temps et $\omega$ est la pulsation de la porteuse.

Alors le signal « g(t) » redressé par le pont 92 est un signal selon la relation :

$$g(t) = \frac{2A}{\pi} + \frac{4A}{\pi}\left(\frac{1}{3}\cos(2\omega t) - \frac{2}{7}\cos(4\omega t) + ...\right)$$

Le redressement du signal f(t) par le pont **92** fait donc apparaître des harmoniques dont la première, de pulsation 2$\omega$, est sélectionnée par le condensateur de résonance **94.**

Une porteuse selon la relation $\frac{4A}{3\pi}\cos(2\omega t)$ est ainsi obtenue de manière simple et efficace à partir de la porteuse utilisée pour la communication entre la puce maître **16** et le lecteur sans contact **30.** La porteuse produite par le redressement et le filtrage offre ainsi un canal de fréquences distinct pour la communication inter-puces. En outre, cette porteuse présentant une fréquence plus élevée, un débit de données plus élevé est obtenu.

On notera que l'amplitude de cette porteuse, à savoir $\frac{4A}{3\pi} = 0,42A$, est suffisante pour alimenter en énergie les puces esclaves de la carte sans contact via l'antenne bus **28** lorsqu'un couplage important est réalisée entre les antennes puces **24, 26** et l'antenne bus **28.**

De plus, comme la force électromotrice induite par la porteuse est proportionnelle à la fréquence de celle-ci, l'énergie pouvant être transmise par chaque antenne puce est doublée. La faible surface de l'antenne puce est ainsi, au moins en partie, compensée de manière simple et efficace.

La puce maître **16** comporte en outre un second pont redresseur **96** raccordé en entrée à l'antenne carte **14** et dont les sorties sont connectées à un démodulateur **98,** à un modulateur **100,** à un circuit de récupération d'horloge **102,** à un circuit de régulation de l'alimentation de la puce maître **104,** ces derniers étant eux même sous le contrôle d'un séquenceur **106.** Ces circuits sont classiques et ne seront pas expliquer plus en détail par la suite.

Le modulateur **100** a pour fonction de faire varier la force électromotrice entre l'antenne carte **14** et l'antenne **90** du lecteur, en imposant alternativement deux valeurs de tensions aux bornes du pont **94** connectées à l'antenne carte **14.** Une modulation d'amplitude du signal aux bornes de l'antenne carte **14** est ainsi obtenue. Les deux valeurs de tension produites par le modulateur **100** sont générées respectivement par deux sources de tension **108, 110.**

De préférence, chacune de ces sources **108, 110** comprend une diode Zener dont on utilise la tension Zener ou une diode dont on utilise la tension de coude. En variante, chacune des sources de tension est constituée d'un transistor MOS dont le drain et la grille sont interconnectés et dont la tension de drain est imposée pour régler la valeur de tension délivrée par la source de tension. L'utilisation d'un tel montage à base de diode ou de transistor MOS a pour effet que sensiblement aucune modulation n'apparaît sur l'antenne puce **26** du fait de la présence du pont **92** et du filtrage LC mis en oeuvre par la combinaison du condensateur de résonance **94** et de la bobine de l'antenne puce **26.** En outre, l'utilisation de diode ou de transistor MOS permet une dissipation efficace des variations de consommation de la puce maître **16.**

Enfin pour la communication de la puce maître **16** avec la puce esclave **20,** la puce maître comprend un second démodulateur **112** ainsi qu'un second modulateur **114,** tous deux sous le contrôle du séquenceur **106.**

De préférence, le second modulateur **114** comporte un agencement série d'un condensateur **116** et d'un interrupteur **118** connecté aux bornes de l'antenne puce **26** en parallèle du condensateur de condensateur **94.** L'ouverture et la fermeture de l'interrupteur **118** module ainsi la charge de l'antenne puce **26** et crée donc une modulation de l'amplitude du signal reçu par les autres puces esclaves du fait du désaccord du circuit LC de l'antenne puce. La modulation de charge purement capacitive de l'antenne puce **26** a pour effet de minimiser le parasitage du signal entre l'antenne carte et l'antenne **90** du lecteur **30** par le signal au borne de l'antenne puce **26.**

La puce esclave **20** comprend quant à elle un ensemble de communication frontal classique aux étiquettes RFID, à savoir un démodulateur **120,** un modulateur **122,** un circuit de récupération d'horloge **124,** un circuit de régulation d'alimentation **126** et un séquenceur **128.** Hormis le fait que la puce esclave communique et est alimentée au moyen d'une porteuse de fréquence double de celle utilisée par le lecteur **30,** son fonctionnement est classique et ne sera donc pas expliqué plus en détail par la suite.

Grâce à l'invention, il est ainsi obtenu les avantages suivants :

■ une communication entre les puces indépendante de la communication entre la puce maître et un lecteur sans contact ;

■ une communication directe entre les puces, sans obligation de passer par un lecteur externe à la carte en tant que relais de communication ;

■ une communication entre puce ne nécessitant aucun contact électrique et piste et par conséquent un packaging simplifié pour la puce sans contact ; et

■ si souhaité, pas d'empilement de puces ce qui permet une grande flexibilité mécanique de la carte sans contact.

## Revendications

**1.** Dispositif comportant :

■ une première antenne inductive (14) ; et
■ une pluralité de puces (16, 20, 22) comportant chacune un circuit intégré et une seconde antenne inductive (24, 26) pour l'alimentation et la communication dudit circuit intégré,

*caractérisé* **en ce que** l'une (16) parmi la pluralité de puces (16, 20, 22) est apte à être reliée à la première antenne inductive (14), et **en ce que** le dispositif comprend en outre une troisième antenne inductive (28 ; 62 ; 70) en couplage inductif avec chacune des secondes antennes de la pluralité de puces.

**2.** Dispositif selon la revendication 1, *caractérisé* **en ce que** ladite une puce parmi la pluralité de puces (16, 20, 22) est connectée électriquement à ladite première antenne inductive (14).

**3.** Dispositif selon l'une des revendications précédentes, *caractérisé* **en ce que** le couplage inductif entre les secondes antennes (24, 26) et la troisième antenne (28 ; 62 ; 70) est apte à permettre de produire dans chaque puce une tension d'alimentation nominale suffisante pour le fonctionnement du circuit intégré interne de chaque puce.

4. Dispositif selon l'une des revendications précédentes, *caractérisé :*

- en ce que chacune des secondes antennes (24, 26) de la pluralité de puces forme au moins une boucle inductive,
- en ce que la troisième antenne (28 ; 62 ; 70) forme au moins une boucle inductive,
- et en ce que la surface définie par la seconde antenne est accolée à la surface définie par la troisième antenne.

5. Dispositif selon la revendication 4, *caractérisé* **en ce que** la troisième antenne (62 ; 70) est vrillée de manière à définir des surfaces élémentaires respectivement accolées aux secondes antennes de la pluralité de puces.

6. Dispositif selon la revendication 5, *caractérisé* **en ce que** le dispositif est une carte à puces (10), et **en ce que** la troisième antenne (62) est vrillée dans le plan de la carte (10).

7. Dispositif selon la revendication 1, 2, 3 ou 4, *caractérisé* **en ce que** la troisième antenne (70) est coudée et vrillée de manière à définir des surfaces élémentaires enroulées respectivement autour des secondes antennes (24, 26) de la pluralité de puces

8. Dispositif selon la revendication 7 lorsque celle-ci dépend de l'une des revendications 1, 2 ou 3, *caractérisé* **en ce que** le dispositif est une carte à puces (10), et **en ce que** la troisième antenne (70) est coudée dans un plan sensiblement perpendiculaire au plan de la carte.

9. Dispositif selon l'une quelconque des revendications 2 à 6, *caractérisé* **en ce que** la surface définie par la troisième antenne (28 ; 62 ; 70) est sensiblement égale à la somme des surfaces définies par les secondes antennes (24, 26) de la pluralité de puces.

10. Dispositif selon l'une quelconque des revendications précédentes, *caractérisé* **en ce qu'**il est apte à communiquer avec son environnement via la première antenne (14) selon un premier canal de communication, et **en ce que** les puces (16, 20, 22) sont aptes à communiquer entre elles via la troisième antenne (28 ; 62 ; 70) selon un second canal de communication différent du premier canal de communication.

11. Dispositif selon la revendication 10; *caractérisé* **en ce que** la puce (16) apte à être reliée à la première antenne (14) comporte un module (92) de redressement du signal reçu sur la première antenne (14) et un module (94, 26) de sélection d'une plage de fréquence du signal redressé, le signal redressé et filtré formant une porteuse pour le second canal de communication.


**Patentansprüche**

1. Vorrichtung mit:

- einer ersten induktiven Antenne (14) und
- einer Vielzahl von Chips (16, 20, 22), die jeweils eine integrierte Schaltung und eine zweite induktive Antenne (24, 26) für die Versorgung und die Kommunikation der integrierten Schaltung umfassen,

**dadurch gekennzeichnet, dass** ein Chip (16) aus der Vielzahl von Chips (16, 20, 22) geeignet ist, mit der ersten induktiven Antenne (14) verbunden zu werden, und dass die Vorrichtung des Weiteren eine dritte induktive Antenne (28; 62; 70) aufweist, die mit jeder der zweiten Antennen der Vielzahl von Chips induktiv gekoppelt ist.

2. Vorrichtung nach Anspruch 1, **dadurch gekennzeichnet, dass** der eine Chip aus der Vielzahl von Chips (16, 20, 22) elektrisch mit der ersten induktiven Antenne (14) verbunden ist.

3. Vorrichtung nach einem der vorhergehenden Ansprüche, **dadurch gekennzeichnet, dass** die induktive Kopplung zwischen den zweiten Antenne (24, 26) und der dritten Antenne (28; 62; 70) geeignet ist, in jedem Chip eine Versorgungsnennspannung zu erzeugen, die für den Betrieb der internen integrierten Schaltung jedes Chips ausreichend ist.

**4.** Vorrichtung nach einem der vorhergehenden Ansprüche, **dadurch gekennzeichnet, dass**:

- jede der zweiten Antennen (24, 26) der Vielzahl von Chips mindestens eine Induktionsschleife bildet,
- die dritte Antenne (28; 62; 70) mindestens eine Induktionsschleife bildet,
- die durch die zweite Antenne definierte Fläche an die durch die dritte Antenne definierte Fläche anschließt.

**5.** Vorrichtung nach Anspruch 4, **dadurch gekennzeichnet, dass** die dritte Antenne (62; 70) so verdreht ist, dass sie Elementarflächen definiert, die jeweils an die zweiten Antennen der Vielzahl von Chips anschließen.

**6.** Vorrichtung nach Anspruch 5, **dadurch gekennzeichnet, dass** die Vorrichtung eine Chipkarte (10) ist und dass die dritte Antenne (62) in der Ebene der Karte (10) verdreht ist.

**7.** Vorrichtung nach Anspruch 1, 2, 3 oder 4, **dadurch gekennzeichnet, dass** die dritte Antenne (70) so gekrümmt und verdreht ist, dass Elementarflächen definiert werden, die jeweils um die zweiten Antennen (24, 26) der Vielzahl von Chips gewickelt sind.

**8.** Vorrichtung nach Anspruch 7, sofern von einem der Ansprüche 1, 2 oder 3 abhängig, **dadurch gekennzeichnet, dass** die Vorrichtung eine Chipkarte (10) ist und dass die dritte Antenne (70) in einer Ebene gekrümmt ist, die im Wesentlichen senkrecht zur Kartenebene ist.

**9.** Vorrichtung nach einem beliebigen der Ansprüche 2 bis 6, **dadurch gekennzeichnet, dass** die durch die dritte Antenne (28; 62; 70) definierte Fläche im Wesentlichen der Summe der durch die zweiten Antennen (24, 26) der Vielzahl von Chips definierten Flächen entspricht.

**10.** Vorrichtung nach einem beliebigen der vorhergehenden Ansprüche, **dadurch gekennzeichnet, dass** sie geeignet ist, mit ihrer Umgebung über die erste Antenne (14) über einen ersten Kommunikationskanal zu kommunizieren, und dass die Chips (16, 20, 22) geeignet sind, miteinander über die dritte Antenne (28; 62; 70) über einen zweiten Kommunikationskanal zu kommunizieren, der sich vom ersten Kommunikationskanal unterscheidet.

**11.** Vorrichtung nach Anspruch 10, **dadurch gekennzeichnet, dass** der Chip (16), der geeignet ist, mit der ersten Antenne (14) verbunden zu werden, ein Modul (92) für das Gleichrichten des über die erste Antenne (14) empfangenen Signals und ein Modul (94, 26) für die Auswahl eines Frequenzbereichs für das gleichgerichtete Signal aufweist, wobei das gleichgerichtete und filtrierte Signal eine Trägerfrequenz für den zweiten Kommunikationskanal bildet.

**Claims**

**1.** Device comprising:

   ▪ a first inductive antenna (14); and
   ▪ a plurality of chips (16, 20, 22) each comprising an integrated circuit and a second inductive antenna (24, 26) for supplying power and communicating with said integrated circuit,

**characterized in that** one chip (16) amongst the plurality of chips (16, 20, 22) is capable of being connected to the first inductive antenna (14) and **in that** the device also comprises a third inductive antenna (28; 62; 70) which is inductively coupled to each of the second antennas of the plurality of chips.

**2.** Device as claimed in claim 1, **characterized in that** said one chip amongst the plurality of chips (16, 20, 22) is electrically connected to said first inductive antenna (14).

**3.** Device as claimed in one of the above claims, **characterized in that** inductive coupling between the second antennas (24, 26) and the third antenna (28; 62; 70) is capable of making it possible to produce a nominal supply voltage in each chip that is sufficient for operation of the integrated circuit in each chip.

**4.** Device as claimed in one of the above claims, **characterized:**

   ▪ in that each of the second antennas (24, 26) of the plurality of chips forms at least one inductive loop,

- and in that the third antenna (28; 62; 70) forms at least one inductive loop,
- and in that the surface defined by the second antenna is back to back with the surface defined by the third antenna.

5. Device as claimed in claim 4, *characterized* **in that** the third antenna (62; 70) is twisted so as to define elementary surface areas that are respectively back to back with the second antennas of the plurality of chips.

6. Device as claimed in claim 5, *characterized* **in that** the device is a smart card (10) and **in that** the third antenna (62) is twisted in the plane of the card (10).

7. Device as claimed in claim 1, 2, 3 or 4, *characterized* **in that** the third antenna (70) is bent and twisted so as to define elementary surface areas that are respectively wrapped around the second antennas (24, 26) of the plurality of chips.

8. Device as claimed in claim 7 when depending on claims 1 ,2 or 3, *characterized* **in that** the device is a smart card (10) and **in that** the third antenna (70) is bent in a plane which is substantially perpendicular to the plane of the card.

9. Device as claimed in any of claims 2 to 6, *characterized* **in that** the surface defined by the third antenna (28; 62; 70) substantially equals the total surface area defined by the second antennas (24, 26) of the plurality of chips.

10. Device as claimed in any of the above claims, *characterized* **in that** it is capable of communicating with its external environment via first antenna (14) over a first communication channel and **in that** chips (16, 20, 22) are capable of communicating with each other via third antenna (28; 62; 70) over a second communication channel which is different to the first communication channel.

11. Device as claimed in claim 10, *characterized* **in that** chip (16) which is capable of being connected to first antenna (14) comprises a module (92) for rectifying the signal received on first antenna (14) and a module (94, 26) for selecting a frequency range of the rectified signal with the rectified and filtered signal forming a carrier for the second communication channel.

Fig. 1

Fig. 2

Fig. 3

Fig. 4

Fig. 5

Fig. 6

Fig. 7

Fig. 8

Fig. 9

Fig. 10

**EP 2 098 981 B1**

## RÉFÉRENCES CITÉES DANS LA DESCRIPTION

### Documents brevets cités dans la description

- FR 2812482